# EUROPEAN PATENT SPECIFICATION

(11) **EP 0 359 369 B1**
(45) Date of publication and mention of the grant of the patent: **22.03.1995**
(21) Application number: 89307100.1
(22) Date of filing: 13.07.1989
(51) Int. Cl.: H05B 3/26

(54) **Bus bar arrangement for an electrically heated vision unit**
Stromschienenanordnung für eine elektrisch geheizte Anzeigeeinheit
Dispositif à barre conductrice pour une unité d'affichage à chauffage électrique

(30) Priority: 15.08.1988 US 232344
(43) Date of publication of application: 21.03.1990
(73) Proprietor: FORD MOTOR COMPANY LIMITED, Brentwood Essex (GB); FORD-WERKE AKTIENGESELLSCHAFT, 50725 Köln (DE); FORD FRANCE S. A., 92506 Rueil-Malmaison Cédex (FR); FORD MOTOR COMPANY, Dearborn, MI 48120 (US)
(72) Inventor: Byars, Joe Brooks, Michigan 48146 (US)
(74) Representative: Messulam, Alec Moses

(56) References cited:
- US-A- 3 794 809
- US-A- 3 892 947
- US-A- 3 893 234
- US-A- 4 543 466

## Description

This invention is directed to an electrically heated vision unit, for example an electrically heated windshield of a motor vehicle. Such vision unit may be defogged and de-iced by application of an electric current to an electrically conductive layer on or in the windshield. More particularly, the invention is directed to an electrically heated vision unit having a new and advantageous arrangement of electrically conductive leads to an upper bus bar in line contact with the upper edge of such electrically conductive layer.

Systems are known for heating vision units such as architectural glass, motor vehicle windows and the like. Motor vehicles, for example, typically are equipped with systems for defogging and de-icing windshields. Generally these systems depend upon heat generated in the internal combustion engine and transferred to the engine's cooling system and then to warm air blown across the interior of the windshield to accomplish the defogging and de-icing. In such a case, of course, it is readily apparent that there is a period of time between the starting of an engine and the time that sufficient heat is being generated in its cooling system in order to provide a defogging and de-icing of the vehicle's windshield. Depending upon the exact temperature conditions and the time the vehicle has been sitting idle without its engine running, the period of time before sufficient heat is available to accomplish this function can be up to ten minutes or more.

In view of the fact that there can be a rather lengthy delay before a motor vehicle's heating and defrosting system can clear a windshield, automotive designers have designed systems which generate heat from electrical energy to accomplish a relatively rapid defrost and de-icing of a vehicle windshield. Such an electrically heated defrosting and de-icing system generally would be independent of the normal heating and defrosting system contained in a motor vehicle. The same technology also is available for heating other vision units, such as architectural glass.

Many different systems have been proposed for accomplishing this rapid heating function, including the placement of an electrically conductive transparent coating on the windshield and embedding fine wires in a laminating interlayer of the windshield. Such systems are disadvantaged by relatively high manufacturing costs. A system of this general type is disclosed in U.S. patent No. 957,728 issued on May 10, 1910 for a "Window." This patent shows a window for vehicles which includes a pane of glass, conducting wires embedded in the glass, and a device for automatically throwing the wires in circuit upon closing of the window and opening the circuit upon opening of the window. In U.S. patent No. 3,313,920 issued on April 11, 1967 for a "Heater Panel" a heater panel is shown which comprises at least one electrically insulated glass sheet with an electrically conductive transparent film formed thereon. A single pair of electrodes extend parallel to each other in contact with the conductive transparent film. The film has a plurality of grooves extending between the electrodes to define a plurality of isolated strips of conductive film extending from one electrode to the other and in electrical contact with the electrodes. In U.S. patent No.3,947,618 issued on March 30, 1976 an electrically heated transparent panel comprises a laminated safety glass windshield construction. This construction has a clear polymer interlayer with a pattern of wrinkled resistance wires oriented in a three dimensional, nonparallel, random fashion so as to reduce glare from wires when the window is used in an automotive or other type of vehicle. In U.S. patent No. 4,361,751 issued on November 30, 1982 for "Electroconductive Window Having Improved Bus Bar" an electroconductive laminated window is disclosed having an electroconductive coating applied to one interior substrate surface with a pair of bus bars electrically connecting a source of electrical potential thereto. The bus bars include an electro- conductive layer interposed between and conformable to the surface configurations of the electroconductive coating. A flexible, metallic current carrying member is provided, said preferably to be a mesh of thin copper foil which is substantially bendable in its own plane. The electroconductive layer is preferably a metallic layer substantially free of non-metallic components, consisting of a mixture of finely divided electroconductive particles and finely divided metal alloy particles having a certain defined fusion temperature.

Each of the foregoing prior art devices suffers one or more disadvantages which make it unsuitable or less desirable for use, particularly for use in motor vehicle windows, especially windshields. Specifically, those which call for opaque components, such as wires, to be embedded in the vision area of the glass generally would have unacceptably high vision impairment.

A preferred technology, now in commercial use, employs an electrically conductive layer or coating covering most of the area of a windshield or other window, which layer is substantially transparent to radiation in the visible wavelength range. Exemplary of such technology is that disclosed in U.S. patent No. 4,543,466 issued on September 24, 1985 to Ramus, entitled "Bus Bar Arrangement For Uniformly Heating A Trapazoidally-Shaped Electrically Heated Windshield", which is assigned to the assignee of the present invention. Therein an electrically heated windshield is disclosed to comprise an electrically conductive layer interconnecting a horizontally extending upper bus bar and a horizontally extending lower bus bar. To reduce costs and avoid undue manufacturing complexity, the electrically conductive wires from the vehicle electrical system to the two bus bars typically are fun bundled together to the bottom of the windshield. There, a first of the wires is connected to the lower bus bar and the second wire, to complete the circuit, is connected to an electrically isolated conductive path extending in the windshield to the upper bus bar. Specifically, such conductive path extends horizontally below the lower bus bar to one side of the windshield and from there vertically to the upper bus bar. While providing generally quite excellent results, the electrically heated windshield of Ramus requires a relatively wide conductive path to the upper bus bar. Such width, since the conductive path is opaque, may be difficult to accommodate in certain motor vehicles in view of product requirements and/or government regulations relating to minimum allowable windshield binocular vision area.

United States Patent 3,892,947 is concerned with a heated rectangular window pane. Heating is achieved by passing an electric current through a conductive layer applied as a coating on the pane. In electrical contact with the coating are two bus bars. One bus bar is located along one edge of the conductive layer. The other bus bar extends substantially around, but spaced from, the entire coating before coming into contact with another edge of the conductive layer. Each of the bus bars is, therefore, provided with only one conductive path in contrast to the invention to be described below in which one bus bar is provided with two conductive lead paths. It is an object of the present invention to overcome the difficulties inherent in the heated windshield of the type taught by Ramus, the disclosure of which is incorporated herein by reference, and in the heated pane described in United States Patent 3,892,947.

It is also an object of the invention to reduce the possibility of failure of an electrically heated vision unit caused by discontinuity in the conductive path resulting from a crack or fissure which may develop in the surface of the underlying substrate. These and other objects and advantages of the invention will be better understood in the light of the following disclosure.

According to the present invention an electrically heated vision unit comprises:
(a) a transparent substrate;
(b) an electrically conductive layer on a surface of the substrate;
(c) an upper, generally horizontally extending bus bar in substantially continuous line contact with an upper edge of the conductive layer;
(d) a generally horizontally extending lower bus bar in substantially continuous line contact with a lower edge of the conductive layer, the conductive layer electrically interconnecting the upper bus bar and the lower bus bar;
(e) an electrically conductive lead to said lower bus bar in substantially continuous line contact with a lower edge of the conductive layer, the conductive layer electrically interconnecting the upper bus bar and the lower bus bar;
(e) an electrically conductive lead to said lower bus bar, said lead being integral with said substrate and electrically insulated from said layer except through said lower bus bar; and
(f) an electrically conductive lead to the upper bus bar, which lead is integral with the substrate, electrically insulated from the conductive layer except through the upper bus bar; characterised in that the said electrically conductive lead to the upper bus bar extends along at least two separate paths, a first path extending upwardly spaced laterally outward of a first side edge of the conductive layer to a first end of the upper bus bar, and a second path extending upwardly spaced laterally outside the opposite side edge of the conductive layer to the opposite end of the upper bus bar.

According to one aspect of the present invention, an electrically heated motor vehicle windshield comprises an electrically heated vision unit as set for the immediately above.

The invention will now be described further, by way of example, with reference to the accompanying drawings, in which illustrates a motor vehicle windshield embodying the invention.

Reference to the present invention as an electrically heated vision unit should be understood to mean that the vision unit can be heated by application of electrical power to a circuit which includes electrically conductive elements of the vision unit. Thus, the vision is adapted to be used or to be installed for use with constant or interruptable connection to a source of electrical power to cause heating of the vision unit, such as for purposes of defogging or de-icing the vision unit. For purposes of illustrating details of preferred embodiments, the following description will be made in terms of a particular preferred application for a vision unit of the invention, specifically, an electrically heated motor vehicle windshield. It should be recognised, however, that numerous alternative applications of the invention are possible, including side and rear windows for a motor vehicle, architectural glass, lenses and the like.

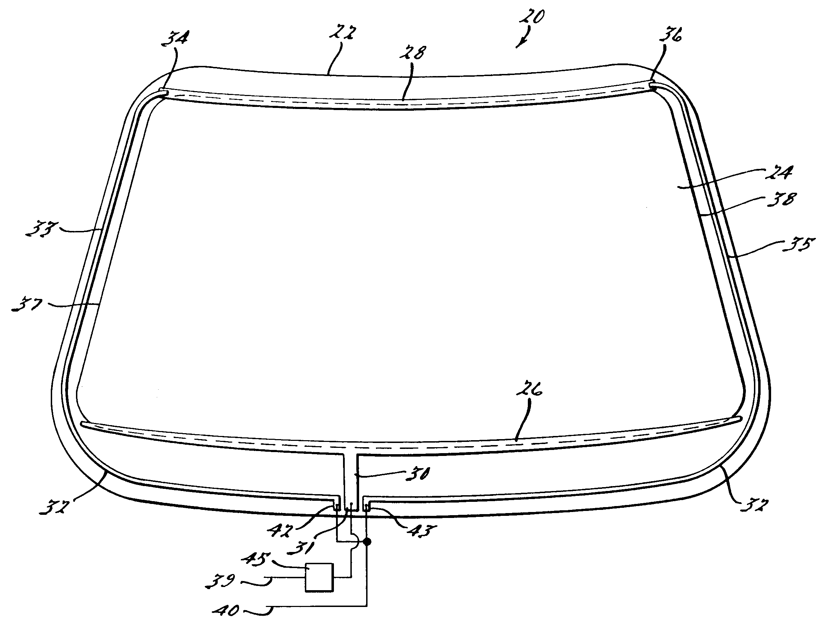

Referring now to the drawing, an electrically heated motor vehicle windshield 20 comprises a transparent substrate 22. As used herein the term "transparent" means that a substrate is transparent at least to visible light, that is, to radiation in the visible wavelength range. Numerous suitable transparent substrate materials and constructions will be apparent to the skilled of the art in view of the present disclosure. Selection of a particular substrate material and construction will depend in large part upon the particular application to be made of the vision unit. For motor vehicle windshield applications, it presently is preferred to employ a laminated construction wherein two sheets of glass are used to form the substrate, the two sheets of glass being united by an interlayer of polyvinylbutryl or the like in a manner well known to those skilled in the art. Windshield 20 is seen to further comprise a continuous, electrically conductive layer 24 on a surface of the substrate, which layer is substantially transparent to visible light. The term "electrically conductive layer" is used herein to mean a film, other coating or the like applied in any suitable manner to the surface of the substrate. Various suitable methods for forming the layer are known to those skilled in the art and will be apparent in view of the present disclosure. The electrically conductive layer may be applied to the windshield, for example, by a magnetron sputtering operation. Magnetron sputtering of glass surfaces is well known in the art. In accordance with the teachings of a preferred embodiment of this invention, the materials used as target materials in the magnetron sputtering device are first zinc and silver, then zinc alone, followed by chromium. The resulting layer on the windshield is a multilayer coating consisting of zinc oxide and a mixture of silver and zinc oxide which form a coating which is electrically conductive.

It should be understood that the description of the electrically conductive elements of the invention being located on a surface of the transparent substrate does not preclude a construction wherein the transparent substrate is a multilayer substrate, the various electrically conductive elements being located on the same or different interior substrate surfaces, i.e., non-exposed surfaces of the substrate layers. As noted above, for vision units according to the invention intended for use as an electrically heated motor vehicle windshield, it is preferred to use as the transparent substrate a laminate construction of two sheets of glass with a polyvinylbutryl interlayer. In accordance with such embodiments of the invention, the electrically conductive coating, the bus bars and the electrically conductive leads in the windshield to the bus bars (the bus bars and leads being described further below) are applied to a surface of one of the sheets of glass which will become an interior surface in the laminated windshield. Preferably, the conductive coating, bus bars and leads are on the interior surface closest to the exterior of the motor vehicle. In this way the conductive layer, bus bars and electrically conductive leads are protected from abrasion and the like, yet able to quickly melt ice and snow on the windshield. Such electrically conductive components, however, may be applied to a single sheet of glass, and this may be suitable particularly for vision units intended for applications other than motor vehicle windshields.

The electrically heated windshield 20 is seen to further comprise generally horizontally extending lower bus bar 26 which is in substantially continuous line contact with the lower edge of the conductive layer 24. By continuous line contact is meant that the lower bus bar is in electrical contact with the lower edge of the conductive layer 24 substantially without discontinuity or break along at least most of the lateral expanse of such lower edge. Similarly, generally horizontally extending upper bus bar 28 is in substantially continuous line contact with the upper edge of the conductive layer 24. Thus, layer 24 electrically interconnects the upper bus bar to the lower bus bar. Various suitable materials and constructions for the bus bars are known to the skilled of the art and will be apparent in view of the present disclosure. For motor vehicle windshield embodiments of the invention the bus bars typically will be made of a silver ceramic material, as known in the art. The bus bars formed of this material are applied, typically by a silk screen printing operation using a liquid printing material, usually to the same interior surface of the transparent substrate to which the conductive layer 24 has been or is to be applied. The liquid material is dried in a suitable drier, such that the finished bus bars are bonded to the surface of the substrate. It should be recognised that while the electrically conductive layer 24, for purposes of illustration, is depicted in the drawing as if it were visible, in motor vehicle window applications of the invention the layer is substantially transparent to visible light. However, the upper and lower bus bars and the electrically conductive leads thereto would be visible if currently preferred materials and production methods were used.

The order of application of the bus bars and conductive layer is not critical to the invention. It generally is somewhat preferred that the bus bars be applied to the surface of the substrate first and that the conductive layer be applied thereafter so as to overlap, in part, the bus bars. However, alternative constructions within the scope of the invention include those wherein the conductive layer is first applied to the substrate followed by the bus bars. As noted above, alternative materials and procedures for applying the conductive layer and bus bars are known to the skilled of the art which will be suitable for electrically heated windshields and at least certain other electrically heated vision units within the scope of the invention.

When it is desired to electrically heat the vision unit, electrical power is conducted to the upper and lower bus bars. For this purpose the windshield embodiment shown in the drawing further comprises a lower conductive lead 30 integral with the substrate. It can be seen that lead 30 is electrically isolated (or must be otherwise electrically insulated) from the conductive layer except through its electrical contact with the lower bus bar. According to the preferred embodiment shown, the lower conductive lead 30 extends on the substrate vertically from a point below the lower bus bar to approximately the longitudinal centre point of the lower bus bar. Terminus 31 of lead 30 at its lower end is seen to be proximate the perimeter of the windshield, at which location electrical connection can be made conveniently to power line 39, typically a current- carrying wire. In the case of a motor vehicle, such wire would connect the lower bus bar either to ground or, more preferably, to the "hot" wire from the vehicle battery or, more preferably, the generator or alternator. The terminus 31 typically may be soldered to a solder pad on the end of the aforesaid current-carrying wire 39. In general, the use of pre-soldered pads is preferred, since it facilitates making the electrical connections, particularly in the context of motor vehicle assembly. This is found to provide a secure and sturdy electrical connection.

To complete the electrical circuit connection must be made to the upper bus bar. According to a unique aspect of the present invention, such connection is made by an electrically conductive lead 32 integral with the substrate and extending along at least two separate paths to the upper bus bar. In the preferred embodiment depicted in the drawing, a first such path 33 extends upwardly to a first end 34 of the upper bus bar 28. A second such path 35 extends upwardly to the second end 36 of the upper bus bar. It will be apparent from this disclosure that each such conductive path must be electrically isolated (or otherwise insulated) from each other and the other electrically conductive components of the vision unit except through the upper bus bar. Accordingly, each of the conductive paths 33, 35 is seen to be laterally spaced outside the corresponding one of the lateral side edges 37, 38 of the conductive layer 24. In the preferred embodiment shown the two conductive paths to the upper bus bar are electrically connected to a common wire or other electrical lead 40. Lead 40, being connected to the upper bus bar, preferably is connected to ground.

Regarding especially vision units of the invention intended for use as an electrically heated windshield of a motor vehicle, it is preferred not only that the separate conductive paths 33, 35 be connected to a common electrical lead 40, but also that they originate proximate one another below the lower bus bar, as in the embodiment depicted in the drawing. It is particularly preferred that they originate proximate one another below the lower bus bar on opposite sides of the above-described lower lead 30. In this way the common electrical lead 40 may conveniently terminate in two solder pads, each of which would be soldered to a terminus 42, 43 of a respective one of the two conductive paths 33, 35 to the upper bus bar. Each such electrically conductive path 33, 35 according to this preferred embodiment extends generally horizontally in opposite directions from its corresponding terminus 42, 43 below the lower bus bar and continues then upwardly, spaced laterally outward of respective lateral side edges of the conductive layer 24 to respective opposite ends 34, 36 of the upper bus bar 28. Several significant advantages of the present invention will be apparent from the foregoing disclosure. One quite significant advantage provided by the dual conductive paths to the upper bus bar is that each such path can be more narrow than would be a single conductive path. By using narrower conductive paths and positioning each close to the corresponding lateral edge of the windshield, a wider visual area is maintained. Such wider visual area may be required by various governmental regulations and/or may be desirable as a product feature. In addition, each of the conductive paths to the upper bus bar provides an alternative to the other in the event one of the two paths becomes nonconducting due to a minor fracture in the substrate or for other reasons. Thus, the invention can be used to better ensure proper product function even in the event of such damage to one of the conductive paths to the upper bus bar.

It will also be recognised by the skilled of the art in view of this disclosure that the foregoing advantages and others of the invention are provided in an electrically heated vision unit while maintaining the benefit of forming the electrically conductive components of the vision unit in accordance with known techniques. Thus, the lower lead 30 and the conductive paths 33 and 35 of the upper bus bar connection means can be formed using materials and production methods described above for the upper and lower bus bars. The terminus 30 at bottom end of lower lead 30 and the termini 42, 43 of the electrically conductive lead 32 to the upper bus bar are adapted in size, shape, etc. according to known principles to facilitate connection in the intended way with an electrical power supply.

The preferred embodiment of an electrically heated vision unit of the invention shown in the drawing comprises several additional preferred features. Specifically, lower bus bar 26 is seen to taper toward each end. This is preferred since the current load carried by the lower bus bar diminishes toward the outer ends thereof as current is passed into the electrically conductive layer 28 along the length of the bus bar. Tapering the lower bus bar reduces the amount of material used in forming it and, since such material typically comprises silver, this in turn reduces the cost of the product. In contrast, since the upper bus bar makes electrical connection at each of its two free ends, it preferably is of uniform width. Feature 45 in power line 39 represents shut-off circuitry. Such circuitry is known to those skilled in the art and comprises means for sensing an electrical fault in an electrically conductive component. In the vision unit of the invention, such circuitry would serve to interrupt current flow to the vision unit in the event of such a fault.

The windshield 20 shown in the drawing is generally of trapezoidal shape, this being typical of the trapezoidal shape dictated by aerodynamic styling of certain motor vehicles. Since the windshield is of generally trapezoidal shape, the electrically conductive layer 24 also has a generally trapezoidal shape in accordance with known principles for achieving heating, and hence defogging, de-icing, etc., over a large portion of the area of the windshield.

## Claims

1. An electrically heated vision unit comprising:
(a) a transparent substrate (22);
(b) an electrically conductive layer (24) on a surface of said substrate (22);
(c) a generally horizontally extending upper bus bar (28) in substantially continuous line contact with an upper edge of said layer (24);
(d) a generally horizontally extending lower bus bar (26) in substantially continuous line contact with a lower edge of said layer (24), said layer (24) electrically interconnecting said upper bus bar (28) and said lower bus bar (26);
(e) an electrically conductive lead (30) to said lower bus bar (26), said lead being integral with said substrate (22), and electrically insulated from said layer (24) except through said lower bus bar (26); and
(f) an electrically conductive lead (32) to said upper bus bar (28), said lead being integral with said substrate (22), electrically insulated from said layer (24) except through said upper bus bar (28); characterised in that the electrically conductive lead (32) extends along at least two separate paths (33,35) a first said path (33) extending upwardly spaced laterally outward of a first side edge of said layer to a first end of said upper bus bar (28) and a second said path (35) extending upwardly spaced laterally outward of a second side edge of said layer to a second end of said upper bus bar (28).

2. An electrically heated vision unit as claimed in claim 1, wherein said separate paths are electrically connected to a common electrical lead extending from a source of electrical power to said vision unit.

3. An electrically heated vision unit as claimed in claim 1 or 2, wherein said separate paths originate proximate one another below said lower bus bar.

4. An electrically heated vision unit as claimed in any one of claims 1 to 3, further comprising an approximately laterally centred lower conductive lead integral with said substrate, electrically insulated from said layer except through said lower bus bar, and extending from below said lower bus bar to approximately the longitudinal centre of said lower bus bar, wherein said separate paths originate proximate one another below said bus bar, laterally spaced from and on opposite sides of said lower conductive lead.

5. An electrically heated vision unit as claimed in claim 4, wherein said lower bus bar tapers in width toward each end and said upper bus bar has substantially uniform width.

6. An electrically heated vision unit as claimed in any one of the preceding claims, further comprising means for sensing an electrical fault in an electrically conductive component of said vision unit and for interrupting current flow to said electrically continuous on said surface of the substrate.

7. An electrically heated vision unit as claimed in any one of the preceding claims, wherein said electrically conductive layer is substantially continuous on said surface of the substrate.

8. An electrically heated vision unit as claimed in any one of the preceding claims being a trapezoidal shaped motor vehicle windshield and comprising:
(a) a transparent substrate;
(b) a continuous and substantially uniformly thick electrically conductive layer of trapezoidal shape approximately centred on said substrate, which layer is substantially transparent to visible light;
(c) an approximately laterally centred, generally horizontally extending upper bus bar on said substrate in substantially continuous line contact with an upper edge of said layer, said upper bus bar having substantially uniform width;
(d) an approximately laterally centred, generally horizontally extending lower bus bar on said substrate in substantially continuous line contact with a lower edge of said layer, said lower bus bar tapering in width toward each end;
(e) an approximately laterally centred lower conductive lead on said substrate extending approximately vertically from below said lower bus bar to an electrical contact therewith; and
(f) upper bus bar connection means for making electrical connection to said upper bus bar, said means being electrically insulated from said layer except through said upper bus bar and comprising two separate electrically conductive paths originating below said lower bus bar, proximate one another and said lower conductive lead, said conductive paths extending generally horizontally in opposite direction below said lower bus bar and continuing upwardly spaced laterally outward of respective lateral side edges of said layer to respective opposite ends of said upper bus bar.

9. An electrically heated vision unit as claimed in claim 8, wherein said separate paths are electrically connected to a common electrical lead extending from a source of electrical power to said vision.

10. An electrically heated vision unit of claim 9, wherein said common electrical lead terminates in two solder pads, each of which is soldered to a terminus of a respective one of said conductive paths.

## Patentansprüche

1. Elektrisch beheizte Sichteinheit, die die folgenden Bestandteile enthält:
(a) durchsichtiges Substrat (22);
(b) elektrisch leitende Schicht (24) auf einer Oberfläche des genannten Substrates (22);
(c) sich im allgemeinen horizontal erstreckende, obere Sammelschiene (28), die mit einer Oberkante der genannten leitenden Schicht (24) im wesentlichen in durchgehendem Außenleiterkontakt steht;
(d) sich im allgemeinen horizontal erstreckende, untere Sammelschiene (26), die mit einer Unterkante der genannten leitenden Schicht (24) im wesentlichen in durchgehendem Außerleiterkontakt steht, wobei die genannte Schicht (24) die genannte obere Sammelschiene (28) und die genannte untere Sammelschiene (26) elektrisch miteinander verbindet;
(e) elektrisch leitende Leitung (30) zu der genannten unteren Sammelschiene (26), wobei die genannte Schicht in das genannte Substrat (22) integriert ist und von der genannten Schicht (24) elektrisch isoliert ist, außer durch die genannte untere Sammelschiene (26); und
(f) elektrisch leitende Leitung (32) zu der genannten oberen Sammelschiene (28), wobei die genannte Leitung in das Substrat (22) integriert ist, elektrisch von der genannten Schicht (24) außer durch die genannte obere Sammelschiene (28) isoliert ist; dadurch gekennzeichnet, daß die elektrisch leitende Leitung (32) sich mindestens entlang zweier getrennter Pfade (33,35) erstreckt, einem ersten genannten Pfad (33), der sich, mit seitlichem Abstand nach außen von einer ersten Seitenkante der genannten Schicht nach oben zu einem ersten Ende der genannten oberen Sammelschiene (28) erstreckt, und einem zweiten genannten Pfad (35), der sich, mit seitlichem Abstand nach außen von einer zweiten Seitenkante der genannten Schicht nach oben zu einem zweiten Ende der genannten oberen Sammelschiene (28) erstreckt.

2. Elektrisch beheizte Sichteinheit nach Anspruch 1, in welcher die genannten getrennten Pfade elektrisch an eine gemeinsame elektrische Leitung angeschlossen sind, die sich von einer Quelle elektrischer Energie zu der genannten Sichteinheit erstreckt.

3. Elektrisch beheizte Sichteinheit nach Anspruch 1 oder 2, in welcher die genannten getrennten Pfade ihren Ausgangspunkt eng beieinander unter der genannten unteren Sammelschiene haben.

4. Elektrisch beheizte Sichteinheit nach einem der vorstehenden Ansprüche 1 bis 3, welche ferner eine ungefähr seitlich zentrierte untere leitende Leitung beinhaltet, die in das genannte Substrat integriert ist, die außer durch die genannte untere Sammelschiene elektrisch von der genannten Schicht isoliert ist, und die sich von unterhalb der genannten unteren Sammelschiene ungefähr zum Längenmittelpunkt der genannten unteren Sammelschiene erstreckt, wobei die genannten getrennten Pfade eng beieinander unter der genannten unteren Sammelschiene ihren Ausgangspunkt haben und mit seitlichem Abstand zu den und auf den gegenüberliegenden Seiten der genannten unteren leitenden Leitung angeordnet sind.

5. Elektrisch beheizte Sichteinheit nach Anspruch 4, in welcher die genannte untere Sammelschiene sich in ihrer Breite zu jedem ihrer Enden hin verjüngt und die genannte obere Sammelschiene eine im wesentlichen gleichmäßige Breite hat.

6. Elektrisch beheizte Sichteinheit nach einem der vorstehenden Ansprüche, welche ferner Mittel zur Erfassung eines elektrischen Fehlers in einem elektrisch leitenden Bestandteil der genannten Sichteinheit und zur Unterbrechung des Stromflusses zu der elektrischen durchgehenden Schicht auf der genannten Substratoberfläche enthält.

7. Elektrisch beheizte Sichteinheit nach einem der vorstehenden Ansprüche, in welcher die genannte elektrisch leitende Schicht auf der genannten Substratoberfläche im wesentlichen durchgehend ist.

8. Elektrisch beheizte Sichteinheit nach einem der vorstehenden Ansprüche, die eine Windschutzscheibe eines Kraftfahrzeuges von trapezförmiger Gestalt ist und die folgenden Bestandteile enthält:
(a) durchsichtiges Substrat;
(b) durchgehende und im wesentlichen gleichmäßig dicke elektrisch leitende Schicht von trapezförmiger Gestalt, die ungefähr zentriert auf diesem Substrat liegt, wobei diese Schicht für sichtbares Licht im wesentlichen durchsichtig ist;
(c) ungefähr seitlich zentrierte, sich im allgemeinen horizontal erstreckende obere Sammelschiene auf dem genannten Substrat, die mit einer Oberkante der genannten Schicht im wesentlichen in durchgehendem Außenleiterkontakt steht, wobei die genannte obere Sammelschiene eine im wesentlichen gleichmäßige Breite hat;
(d) ungefähr seitlich zentrierte, sich im wesentlichen horizontal erstreckende untere Sammelschiene auf dem genannten Substrat, die mit einer Unterkante der genannten Schicht im wesentlichen in durchgehendem Außenleiterkontakt steht, wobei die genannte untere Sammelschiene sich in ihrer Breite zu jedem ihrer Enden hin verjüngt;
(e) ungefähr seitlich zentrierte untere leitende Leitung auf dem genannten Substrat, die sich ungefähr vertikal von unterhalb der genannten unteren Sammelschiene zu elektrischen Kontakt mit dieser erstreckt, und
(f) Anschlußmittel für die obere Sammelschiene zur Herstellung eines elektrischen Anschlusses an die genannte obere Sammelschiene, wobei das genannte Mittel von der genannten Schicht außer durch die genannte obere Sammelschiene elektrisch isoliert ist und zwei getrennte elektrisch leitende Pfade aufweist, die ihren Ausgangspunkt unter der genannten unteren Sammelschiene haben, eng beieinander liegen und wobei die genannte untere leitende Leitung und die genannten leitenden Pfade sich im allgemeinen in entgegengesetzte Richtungen unter der genannten unteren Sammelschiene erstrecken und sich nach oben mit seitlich nach außen angeordnetem Abstand von den seitlichen Seitenkanten der genannten Schicht zu den jeweiligen gegenüberliegenden Enden der genannten oberen Sammelschiene fortsetzen.

9. Elektrisch beheizte Sichteinheit nach Anspruch 8, in welcher die genannten getrennten Pfade elektrisch an eine gemeinsame elektrische Leitung angeschlossen sind, die sich von einer Quelle elektrischer Energie zu der genannten Sichteinheit erstreckt.

10. Elektrisch beheizte Sichteinheit nach Anspruch 9, in welcher die genannte gemeinsame elektrische Leitung in zwei Lötauflagen endet, von denen jede an einen Endpunkt eines jeweiligen der genannten leitenden Pfade gelötet ist.

## Revendications

1. Unité de vision chauffée électriquement comprenant :
(a) un substrat transparent (22) ;
(b) une couche électroconductrice (24) sur une surface du substrat (22) ;
(c) une barre bus supérieure (28) s'étendant généralement de manière horizontale en contact linéaire essentiellement continu avec une arête supérieure de la couche conductrice (24) ;
(d) une barre bus inférieure (26) s'étendant généralement de manière horizontale en contact linéaire essentiellement continu avec une arête inférieure de la couche conductrice (24), ladite couche (24) reliant de manière électrique ladite barre bus supérieure (28) et ladite barre bus inférieure (26) ;
(e) une amenée électroconductrice (30) vers ladite barre bus inférieure (26) , ladite amenée étant intégrée avec ledit substrat (22) et isolée électriquement de ladite couche (24) sauf à travers ladite barre bus inférieure (26) ; et
(f) une amenée électroconductrice (32) vers ladite barre bus supérieure (28), ladite amenée étant intégrée audit substrat (22) et isolée électriquement de ladite couche (24) sauf à travers ladite barre bus inférieure (28) ; caractérisée en ce que l'amenée électroconductrice (32) s'étend le long d'au moins deux trajets séparés (33, 35), un premier trajet (33) s'étendant vers l'extérieur latéralement espacé vers le haut d'une première arête latérale de ladite couche vers une première extrémité de ladite barre bus supérieure (28) et un second trajet (35) s'étendant vers l'extérieur latéralement espacé vers le haut d'une seconde arête latérale de ladite couche vers une seconde extrémité de ladite barre bus supérieure (28).

2. Unité de vision chauffée électriquement selon la revendication 1, dans laquelle lesdits trajets séparés sont reliés électriquement à une amenée électrique commune s'étendant depuis une source de puissance électrique vers ladite unité de vision.

3. Unité de vision chauffée électriquement selon la revendication 1 ou 2, dans laquelle lesdits trajets séparés partent à proximité l'un de l'autre sous ladite barre bus inférieure.

4. Unité de vision chauffée électriquement selon l'une des revendications 1 à 3, comprenant également une amenée conductrice inférieure centrée approximativement latéralement intégrée audit substrat, isolée électriquement de ladite couche sauf à travers ladite barre bus inférieure et s'étendant depuis le dessous de ladite barre bus inférieure vers approximativement le centre longitudinal de ladite barre bus inférieure, dans laquelle lesdits trajets séparés partent à proximité l'un de l'autre sous ladite barre bus, espacée latéralement de ladite amenée conductrice inférieure et sur des côtés opposés de celle-ci.

5. Unité de vision chauffée électriquement selon la revendication 4, dans laquelle ladite barre bus inférieure se rétrécit en largeur vers chaque extrémité et ladite barre bus supérieure conserve essentiellement la même largeur.

6. Unité de vision chauffée électriquement selon l'une des revendications précédentes, comprenant également des moyens destinés à détecter une défaillance électrique dans un composant électroconducteur de ladite unité de vision et à interrompre le courant allant vers ladite couche électriquement continue sur ladite surface du substrat.

7. Unité de vision chauffée électriquement selon l'une des revendications précédentes, dans laquelle ladite couche électroconductrice est essentiellement continue sur ladite surface du substrat.

8. Unité de vision chauffée électriquement selon l'une des revendications précédentes, constituant un pare-brise pour véhicule à moteur de forme trapézoïdale et comprenant :
(a) un substrat transparent ;
(b) une couche électroconductrice essentiellement uniformément épaisse et continue de forme trapézoïdale approximativement centrée sur ledit substrat, ladite couche étant essentiellement transparente à la lumière visible ;
(c) une barre bus supérieure s'étendant généralement horizontalement approximativement latéralement centrée sur ledit substrat en contact linéaire essentiellement continu avec une arête supérieure de ladite couche, ladite barre bus supérieure présentant une largeur essentiellement uniforme ;
(d) une barre bus inférieure s'étendant généralement de manière horizontale approximativement centrée latéralement en contact linéaire essentiellement continu avec une arête inférieure de ladite couche, ladite barre bus inférieure se rétrécissant en largeur vers chaque extrémité ;
(e) une amenée conductrice inférieure approximativement centrée latéralement sur ledit substrat s'étendant approximativement verticalement depuis le dessous de ladite barre bus inférieure vers un contact électrique avec celle-ci ; et
(f) des moyens de connexion avec la barre bus supérieure destinés à réaliser une connexion électrique avec ladite barre bus supérieure, lesdits moyens étant isolés électriquement de ladite couche sauf à travers ladite barre bus supérieure et comprenant deux trajets séparés électroconducteurs partant sous ladite barre bus inférieure, proches l'un de l'autre et de ladite amenée conductrice inférieure, lesdits trajets conducteurs s'étendant généralement de manière horizontale en direction opposée sous ladite barre bus inférieure et continuant vers le haut en étant espacés latéralement vers l'extérieur des arêtes (ou bords) latérales respectives de ladite couche vers les extrémités opposées respectives de ladite barre bus supérieure.

9. Unité de vision chauffée électriquement selon la revendication 8, dans laquelle lesdits trajets séparés sont connectés électriquement à une amenée électrique commune s'étendant depuis une source de puissance électrique vers ladite unité de vision.

10. Unité de vision chauffée électriquement selon la revendication 9, dans laquelle ladite amenée électrique commune se termine en deux patins à braser, chacun d'eux étant soudé à un terminus de l'un des trajets conducteurs respectifs.
